# EUROPEAN PATENT SPECIFICATION

(11) **EP 2 559 955 B1**
(45) Date of publication and mention of the grant of the patent: **27.11.2019**
(21) Application number: 11768438.1
(22) Date of filing: 14.04.2011
(51) Int. Cl.: F24S 23/71, F24S 23/79, F24S 30/45, F24S 30/40, F24S 23/77

(54) **SOLAR HEAT COLLECTING SYSTEM**
SONNENWÄRMESAMMELSYSTEM
SYSTÈME DE COLLECTE DE CHALEUR SOLAIRE

(30) Priority: 14.04.2010 CN 201010153222
(43) Date of publication of application: 20.02.2013
(73) Proprietor: Suzhou Saipa Solar Technology Co., Ltd, Suzhou, Jiangsu 215214 (CN)
(72) Inventor: YU, Qi, - (CN); YU, Zhongliang, - (CN)
(74) Representative: Handsome I.P. Ltd
(86) International application number: PCT/CN2011/072764
(87) International publication number: WO 2011/127826

(56) References cited:
- WO-A1-2009/144700
- CN-A- 101 408 668
- CN-A- 101 446 274
- CN-A- 101 806 502
- CN-U- 201 652 878
- CN-Y- 201 069 278
- CN-Y- 201 081 440
- CN-Y- 201 081 440
- JP-A- H08 222 017
- JP-A- 2008 025 871
- US-A- 3 171 403

## Description

The present invention relates to a solar heat collecting device, and in particular to a low-cost and highly-efficient heat collecting device, which is applicable to fields such as universal civil and industrial large-scale thermal power generation.

### Description of the Related Art

A solar heat collector is a device for absorbing sunlight and transferring the heat generated by the sunlight to a device provided with heat transfer working substance. The heat collector is a key part constituting a solar heat utilization system. Different heat collecting methods form different types of heat collectors, which are generally categorized into focusing heat collector and non-focusing heat collector. The efficiency in collecting energy by the non-focusing heat collector is low and the energy collected by the non-focusing heat collector is in poor quality. The focusing heat collector is capable of concentrating the solar energy collected within a large area to a smaller area or even a spot, thereby obtaining quality and high-temperature thermal energy with a concentration ratio of 104. In power generation systems of a solar air conditioner, a solar steam turbine, and a solar gas turbine that require medium-high temperature thermal energy, since the energy flow concentration of sun radiation is low, the non-focusing heat collector cannot reach the required temperature, and only the focusing heat collector is capable of obtains a high energy flow concentration, and providing a more convenient basis for utilization of the solar energy.

The focusing heat collector has long been a most effective apparatus for concentrating sunlight. A focusing reflecting mirror achieves an optical heat collection effect only by tracking motions of the sun. The focus of the focusing reflecting mirror changes with movement of the reflecting mirror. In this way, the size and weight of the receiver for receiving heat are restricted. A large size shades the area of the reflecting mirror's surface for receiving the sunlight, and a heavy weight adds load to the support part and the rotation part. In addition, discreteness, intermittence, and unreliability of the solar energy, and scenarios of cloud and wind, all affect the heat collection effect on the heat receiving surface of the heat receiver. Moreover, the heat receiver is in the running state, which hinders output of the received solar energy, especially output and application of high-temperature and quality energy. An optical collector, referred to as heliostat, is being long time searched to solve the problem. The heliostat is capable of concentrating sunlight only by using a collecting mirror to track the motion of the sun, at a fixed focus.

Since 1930s, many scholars and experts famous home and abroad have endeavored to design a most effective "heliostat" fixed-focus collecting system-tower receiver, whose heat dissipation area is relatively small. Therefore, relative high photothermal conversion efficiency is achieved. The tower solar heat collector is capable of generating high temperatures reaching 500°C-600°C, and can conveniently collaborate with high-temperature and high-pressure thermal power plants. In this way, a higher thermal efficiency is achieved for solar thermal power generation, and collaborative equipment can be simply obtained. However, the cost in constructing such a solar power plant is extremely high, and the initial investment may be as much as 34-48 thousand yuan per KW. Only the heliostats accounts for 52% of the total costs, and the space occupation exponentially increases with the increase of the power class. The control system for the heliostat is extremely complex. An expert, through years' research, only simplifies M x N control units/mirror into (M + N) control units.

US 3,171,403 recites an optical device that the rays of the sun S are collected by a plurality of mirrors on the concave surface of the collector C. The collector C is a concave receiver, indicated as R. This receiver is adjustably supported with respect to the collector C by the struts 19. On the receiver R is a concave surface carrying mirrors which reflect the rays S through the aperture 11 in the center of the collector C. The curvature and spacing between collector C and receiver R is such that the rays of light leaving the receiver R follow parallel paths directed through the aperture 11 in the collector C to the surface of inclined mirror D, which in turn is inclined at an angle of 45° and mounted concentric with an axis through the bearings 14-14 about which the collector C and receiver R are tiltable as a unit. From the mirror D, the rays of reflected sun light are directed to a mirror E and thence to a lens L which will focus the rays, so as to provide a source of intense heat. CN 201069278 recites a high energy sunshine collecting guider provided with a supporting frame, a spot light board movably connected with the supporting frame, a horizontal rotary mechanism controlling the spot light board to rotate and an elevation angle driving mechanism, wherein the top end of the spot light board is provided with a photoelectric detector through a supporting frame.

JP H08222017 recites that in order to receive a large amount of sunlight, condense, and transmit the sunlight in low damping with a small cross section light duct by using a spherical reflecting mirror, a hyperboloid reflecting mirror, a plane reflecting mirror and the like. Sunlight parallel to an optical axis, reflected with a spherical reflecting mirror 1 having a focal point and the optical axis jointly with a hyperboloid reflecting mirror 2 is incident into the reflecting mirror 2, becomes a coherent light flux of a parallel light or near to a parallel light parallel to the optical axis passed through a hyperboloid reflecting mirror passing hole 38. The low damping light flux with is transmitted to a vertically lower part through a plane reflecting mirror 3 which has horizontal, vertical rotating axes jointly with the reflecting mirror 1, has an angle of 45 deg. to a horizontal surface when the axis of the reflecting mirror 1 is horizontal, and rotates 45 deg.-1/2*[theta]according to increase/decrease of the vertical angle [theta] of the reflecting mirror to form a sunlight condensing device capable of condensing a large amount of sunlight and transmitting it in low damping with a small cross section light duct.

### SUMMARY OF THE INVENTION

In view of the above defects in the prior art, the present invention is directed to providing an solar heat collecting system with high heat collection efficiency and a fixed receiver.

The objectives of the present invention are achieved through a solar heat collecting system according to claim 1.

A solar heat collecting system, includes a collecting mirror tracking the sun in real time, a receiver for receiving heat and storing energy, and an electrical control unit for controlling the collecting mirror to track the sun; where the heliostat solar heat collecting system is further provided with a projection mirror that is disposed coaxially and integrally with the collecting mirror and the focus of which is coincident with that of the collecting mirror, a through hole not interfering with the light spot of the collecting mirror and far smaller than the surface of the collecting mirror is disposed at the center of the collecting mirror; and a reflecting mirror is disposed at the side of the collecting mirror opposite to the projection mirror, the reflecting mirror, the collecting mirror, and the projection mirror form a mirror assembly, a receiver is fixedly disposed at the extending direction of the primary optical axis line of the reflecting mirror, and a first motor is disposed at the primary optical axis line for driving the whole mirror assembly to rotate around the primary optical axis of the reflecting mirror, where the first motor is connected to the electrical control unit and runs under control thereof.

Further, in the solar heat collecting system, the mirror assembly for heat collection is mounted on a gyro gimbal, and the solar heat collecting system is also provided with a collecting mirror angle adjusting assembly axially vertical with the rotation axis of the mirror assembly, including a second motor traction rod and a clump weight whose torques are offset relative to the reflection center, where the second motor traction rod is connected to the backlight surface of the collecting mirror.

The reflecting mirror is a plane mirror or a ball mirror with a ring concave surface.

The lateral surface of the receiver is coated with heat insulating material.

The shape of the collecting mirror is a paraboloid of revolution having the focusing performance, or a convex mirror in a spherical shape.

The first motor and the second motor are selected from the group consisting of at least one stepping motor and servo motor.

Further, the solar heat collecting system further includes more than one mirror assembly, and their respective electrical control unit, where the electrical control units are serially or parallelly connected to each other and run synchronously, and the primary optical axis line of the reflecting mirror of the mirror assembly concentrates at the receiver which has a relatively fixed location.

The application of the solar heat collecting system achieves the following effects:

With a combination of a collecting mirror, a projection mirror, and a reflecting mirror, and use of optical principles such as optical focusing, projection, and reflecting, radiation from the sun or celestial bodies is constantly reflected to a fixed receiver or ocular. This effectively improves the concentration ratio of the sun to over 100 thousand times, thereby bringing convenience for utilizing high-temperature solar energy. Meanwhile, the system is simple in structure, and imposes a relatively low requirement regarding combination with the buildings, and is less-costly. To be specific, the system costs less than nuclear power, and causes no hazards. During use of the system, the solar energy in all wave bands is absorbed, and the heat conversion efficiency is high.

The following further describes the specific embodiments of the present invention with reference to the drawings, so that the technical solutions of the present invention are better understood.

### BRIEF DESCRIPTION OF THE DRAWINGS

FIG. 1 is a schematic structural diagram of a solar heat collecting system according to an embodiment of the present invention;
FIG. 2 is a schematic diagram of running state according to the embodiment illustrated in FIG. 1;
FIG. 3 is a schematic principle diagram of an optical path of the solar heat collecting system according to an embodiment of the present invention;
FIG. 4 is a schematic structural diagram according to another embodiment of the present invention (the drawing of a projection mirror is omitted); and

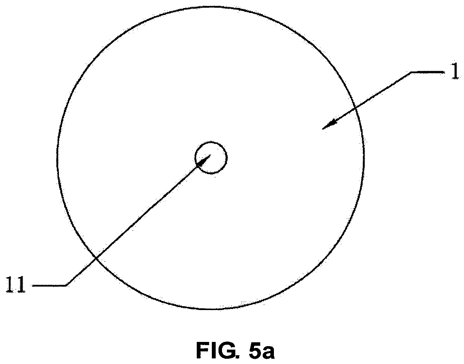

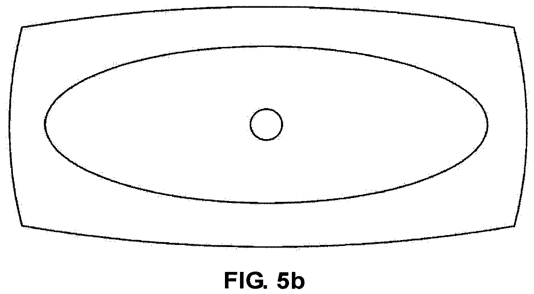

FIGS. 5a and 5b are elevation diagrams of two preferred structure forms of a collecting mirror according to the present invention.

### DETAILED DESCRIPTION OF THE INVENTION

Various embodiments of the present invention provide a system and method for positioning using an active RFID tag. The following section describes the technical solution of the present invention in combination with accompanying drawings and embodiments.

To further improve the energy conversion efficiency of the environmental-friendly and inexhaustible solar energy and promote application of the solar energy in various energy-consuming fields, the present invention provides a solar heat collecting system. The present invention breaks through the prior art-the inherited idea of a heliostat tower heat collecting system, and has innovatively enabled the sunlight to constantly radiate towards a fixed receiver by using optical principles such as optical focusing, projection, and reflecting. Therefore, no matter how the collecting mirror rotates, the primary axis still does not change. The heat collecting system described herein is temporarily referred to as "FPR".

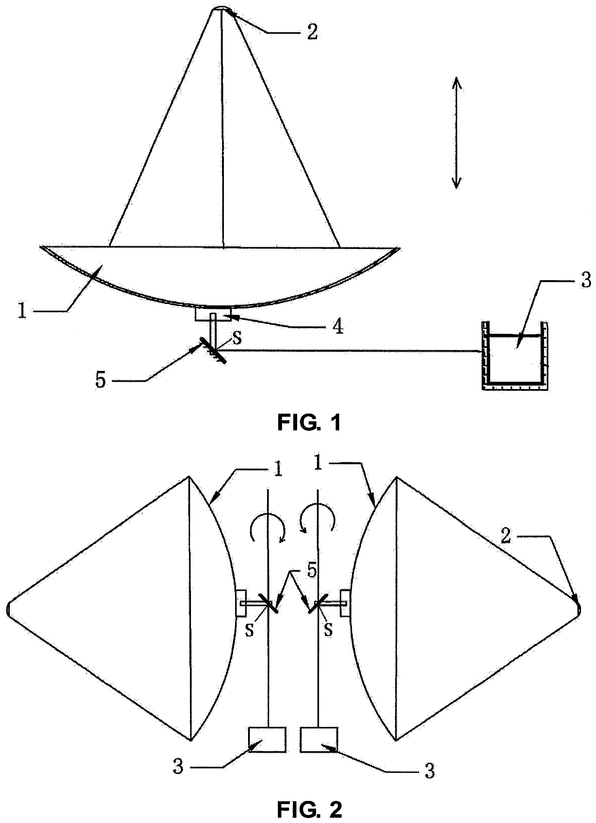

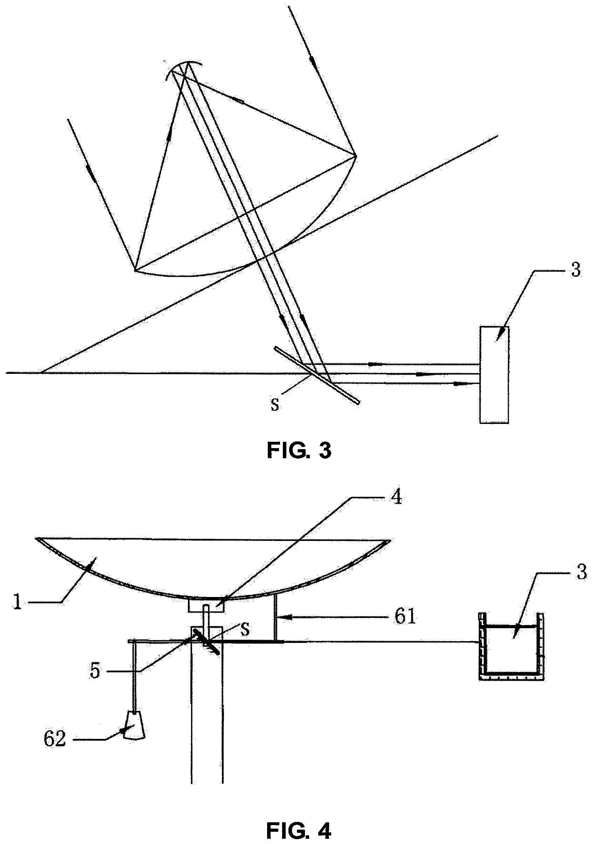

FIGS. 1 to 3 are respectively a schematic structural diagram, a schematic diagram of running state, and a schematic principle diagram of the optical path according to a preferred embodiment of the present invention. As shown in the FIGS, a projection mirror 2, which is opposite to the projection surface and the focus of which is coincident with the collecting mirror, is disposed on the other side of the focus of the collecting mirror 1. The collecting mirror 1 and the projection mirror 2 are integrally connected through a gyro gimbal 4. A through hole 11 is disposed at the part, which is spotted by a projection light spot, at the bottom of collecting mirror 1. A reflecting mirror 5 is disposed below the through hole 11, and is connected to the gyro gimbal 4 and a hole border. The reflecting mirror 5 is capable of rotating on the gyro gimbal. The reflecting mirror, the collecting mirror, and the projection mirror form a mirror assembly. A receiver 3 is fixedly disposed at the extending direction of the primary optical axis line of the reflecting mirror, and a first motor is disposed at the primary optical axis line for driving the whole mirror assembly to rotate around the center of the reflecting mirror, where the first motor is connected to the electrical control unit and runs under control thereof.

The above technical solution may be optimized as follows: The FPR solar heat collecting system is further provided with a collecting mirror angle adjusting assembly axially vertical with the rotation axis of the mirror assembly, including a second motor traction rod 61 and a clump weight 62 whose torques are offset relative to the reflection center, where the second motor traction rod 61 is connected to the backlight surface of the collecting mirror. The first motor and the second motor may be selected from the group consisting of a stepping motor, a servo motor, or other similar precision control motor.

The reflecting mirror is a plane mirror or a ball mirror with a ring concave surface. The shape of the collecting mirror is a paraboloid of revolution having the focusing performance, or a convex mirror in a spherical shape. In addition, the lateral surface of the receiver may also be coated with heat insulating material or be thermally-insulated using vacuum heat insulating technology.

The reflecting light at the center of the reflecting mirror is referred to as the primary optical axis. The first motor disposed on the primary optical axis line enables the mirror assembly of the entire heat collecting system to rotate around the primary optical axis, tracking rise and fall of the run and moving synchronously with the sun. With adjustment of the elevation angles in the south and north direction, the system ensures that the sunlight vertically radiates to the collecting mirror. Since the entire collecting mirror system rotates around the primary optical axis starting from S as an originating point. The incident light from the reflecting mirror forms a constant angle with the primary optical axis, and the incident beam (projection beam) constantly radiates, along the direction of the primary optical axis, to the receiver through reflection.

The sun rises in the east and falls in the west, and moves between the Tropical of Capricorn and the Tropic of Cancer, changing at a total angle of 470 degrees, with 0.2575340 degree each day. To ensure that the focusing system is constantly vertical with the sunlight and achieves an optimal heat collection effect, a second motor is mounted at the axis where S point is vertical with the paper surface, to enable the entire collecting mirror system to rotate left and right around S axis, and adjust the inclination angle of the collecting mirror to ensure that the collecting mirror is vertical with the incident sunlight. To ensure that the reflecting light does not change along the primary optical axis, the inclination angle between the reflecting mirror and the horizontal direction is adjusted to ensure that the incident angle is equal to the reflection angle.

During adjustment of the inclination angle of the collecting mirror by using the motor, the elevation angle of the reflecting mirror is simultaneously adjusted. This, specifically, ensures that a fixed heat-receiving object (a target or ocular) constantly and effectively receives the sunlight, satisfying the requirement of an FPR.

To make the reflection light to form a light spot at the heat collector or the FPR, the reflecting mirror is made to a ball and ring-shape concave mirror with a ball, similar to a tyre, that is, the projection light focuses at one point through secondary focusing. The FPR system with the above single-mirror assembly is a universal daily necessity such as the solar air conditioner, and solar shower. The diameter of the collecting mirror does not need to be made larger, and in addition, the system does not need to be disposed on the roof to receive sunlight. To be specific, the system satisfies basic needs in the daily life at a lower generation power consumption ratio (smaller than 0.1%).

Besides, the FPR heat collecting system according to the present invention sees a wider application in solar thermal power generation. To be specific, the heat collecting system includes more than one mirror assembly and their respective electrical control unit. The electrical control units are serially or parallelly connected to each other and run synchronously, and the primary optical axis line of the reflecting mirror of the mirror assembly concentrates at the receiver which has a relatively fixed location. Compared with the currently popular heliostat system, the FPR solar heat collecting system has a notable power costs per unit. In addition, in aspects of space occupation, and solar energy conversion and utilization rates, the system according to the present invention is advantageous.

Therefore, according to the technical solutions of the FPR solar heat collecting system, with a combination of a collecting mirror, a projection mirror, and a reflecting mirror, and use of optical principles such as optical focusing, projection, and reflecting, radiation from the sun or celestial bodies is constantly reflected to a fixed receiver or ocular. This effectively improves the concentration ratio of the sun to over 100 thousand times, thereby bringing convenience for utilizing high-temperature solar energy. Meanwhile, the system is simple in structure, and imposes a relatively low requirement regarding combination with the buildings, and gains high heat conversion efficiency. In the case of a project with an equivalent scale, the system costs less than nuclear power, and causes no hazards. Such characteristics facilitate promotion and popularity of the solar energy resources in fields such as the civil and scaled thermal power generation and solar air conditioning.

## Claims

1. A solar heat collecting system, comprising a collecting mirror (1) tracking the sun in real time, a receiver (3) for receiving heat and storing energy, and an electrical control unit for controlling the collecting mirror (1) to track the sun;
wherein the solar heat collecting system further comprises: a projection mirror (2) and a reflecting mirror (5);
wherein the projection mirror (2) is disposed coaxially and integrally with the collecting mirror (1) and a focus of the projection mirror (2) is coincident with that of the collecting mirror (1), and the projection mirror (2) is disposed on another side of the focus of the collecting mirror (1); wherein a through hole (11) not interfering with a light spot of the collecting mirror (1) and far smaller than a surface of the collecting mirror (1) is disposed at a center of a bottom of the collecting mirror (1); wherein the reflecting mirror (5) is disposed at a side of the collecting mirror (1) opposite to the projection mirror (2), is disposed below the through hole (11), wherein the reflecting mirror (5), the collecting mirror (1), and the projection mirror (2) form a mirror assembly;
wherein the receiver (3) is fixedly disposed at an extending direction of a primary optical axis line of the reflecting mirror (5), and a first motor is disposed at the primary optical axis line for driving the whole mirror assembly to rotate around the primary optical axis line which is a rotation axis of the mirror assembly, wherein the first motor is connected to the electrical control unit and runs under control thereof; wherein the solar heat collecting system further comprises a collecting mirror angle adjusting assembly axially vertical with the rotation axis of the mirror assembly, including a clump weight (62) whose torques are offset relative to a reflection center of the reflecting mirror (5), wherein the primary optical axis is a reflecting light at the reflection center of the reflecting mirror (5);
wherein the first motor disposed on the primary optical axis line is configured to enable the mirror assembly to rotate around the primary optical axis, tracking rise in the east and fall in the west of the run and moving synchronously with the sun; and
wherein the second motor is configured to draw the second motor traction rod (61) and the clump weight (62) to adjust an inclination angle of the collecting mirror (1) to ensure that the collecting mirror (1) is vertical with the incident sunlight of the sun to track the sun when the sun moves between the Tropical of Capricorn and the Tropic of Cancer each day, **characterized in that** the collecting mirror (1) and the projection mirror (2) are integrally connected through a gyro gimbal (4); **in that** the reflecting mirror (5) is connected to the gyro gimbal (4) and a hole border, wherein the reflecting mirror (5) is capable of rotating on the gyro gimbal (4); and **in that** the collecting mirror angle adjusting assembly includes a second motor traction rod (61) connected to a backlight surface of the collecting mirror (1).

2. The solar heat collecting system according to claim 1, wherein the reflecting mirror (5) is a plane mirror.

3. The solar heat collecting system according to claim 1, wherein the reflecting mirror (5) is a ball mirror with a ring concave surface.

4. The solar heat collecting system according to claim 1, wherein a lateral surface of the receiver (3) is coated with heat insulating material.

5. The solar heat collecting system according to claim 1, wherein a shape of the collecting mirror (1) is a paraboloid of revolution having a focusing performance, or a convex mirror in a spherical shape.

6. The solar heat collecting system according to claim 1, wherein the first motor and the second motor are selected from a group consisting of at least one of a stepping motor and a servo motor.

7. The solar heat collecting system according to claim 1, comprising more than one mirror assembly, and their respective electrical control unit; wherein the electrical control units are serially or parallelly connected to each other and run synchronously, and the primary optical axis line of the reflecting mirror (5) of the mirror assembly concentrates at the receiver (3) which has a relatively fixed location.

## Patentansprüche

1. Solarwärmegewinnungssystem umfassend einen Sammelspiegel (1), welcher der Sonne in Echtzeit folgt, einen Empfänger (3) für die Aufnahme der Wärme und das Speichern der Energie und eine elektrische Steuereinheit für die Steuerung des Aufnahmespiegels (1) beim Folgen der Sonne,
wobei das Solarwärmegewinnungssystem weiterhin umfasst: einen Projektionsspiegel (2) und einen Reflexionsspiegel (5),
wobei der Projektionsspiegel (2) koaxial zu und integral mit dem Sammelspiegel (1) angeordnet ist und ein Brennpunkt des Projektionsspeigels (2) mit demjenigen des Sammelspiegels (1) zusammenfällt, und der Projektionsspiegel (2) auf einer anderen Seite des Brennpunkts des Sammelspiegels (1) angeordnet ist,
wobei ein durchgehendes Loch (11), welches nicht einen Lichtflecken des Sammelspiegels (1) behindert und weitaus kleiner ist als die Oberfläche des Sammelspiegels (1) in einer Mitte des Bodens des Sammelspiegels (1) angeordnet ist,
wobei der Reflexionsspiegel (5) an einer Seite des Sammelspiegels (1) gegenüber dem Projektionsspiegel (2) angeordnet ist und unterhalb des durchgehenden Lochs (11) angeordnet ist,
wobei der Reflexionsspiegel (5), der Sammelspiegel (1) und der Projektionsspiegel (2) eine Spiegelanordnung bilden,
wobei der Empfänger (3) fest angeordnet ist in einer verlängerten Richtung einer primären optischen Achslinie des Reflexionsspiegels (5) und ein erster Motor an der primären optischen Achslinie angeordnet ist, um die gesamte Spiegelanordnung so anzutreiben, dass sie um die primäre optische Achslinie rotiert, welche eine Rotationsachse der Spiegelanordnung ist, wobei der erste Motor mit der elektrischen Steuerungseinheit verbunden ist und unter deren Steuerung läuft,
wobei das Solarwärmegewinnungssystem weiterhin eine Einrichtung für die Winkeleinstellung des Sammelspiegels umfasst, welche axial vertikal ist mit der Rotationsachse der Spiegelanordnung, umfassend ein Klotzgewicht (62), dessen Drehungen relativ zu einem Reflexionszentrum des Reflexionsspiegels (5) versetzt sind,
wobei die primäre optische Achse ein reflektiertes Licht im Reflexionszentrum des Reflexionsspiegels (5) ist;
wobei der erste Motor an der primären optischen Achslinie angeordnet ist und eingerichtet ist, um die Spiegelanordnung um die primäre optische Achse zu rotieren, den Aufgang im Osten zu verfolgen und den Untergang im Westen des Laufs zu verfolgen und sich synchron mit der Sonne zu bewegen
und wobei der zweite Motor eingerichtet ist, die Traktionsstange (61) des zweiten Motors und das Klotzgewicht (62) zu ziehen, um einen Neigungswinkel des Sammelspiegels einzustellen, um sicher zu stellen, dass der Sammelspiegel (1) vertikal mit dem einfallenden Sonnenlicht ist, um die Sonne zu verfolgen, jeden Tag, wenn sich die Sonne zwischen dem Wendekreis des Steinbocks und dem Wendekreis des Krebses bewegt,
**dadurch gekennzeichnet, dass** der Sammelspiegel (1) und der Projektionsspiegel (5) integral über einen Drehbügel (4) verbunden sind, dass der Reflexionsspiegel (5) mit dem Drehbügel und einer Lochumrandung verbunden ist, wobei der Reflexionsspiegel (5) in der Lage ist, auf dem Drehbügel (4) zu rotieren und dass die Einrichtung für die Winkeleinstellung des Sammelspiegels eine Traktionsstange (61) für den zweiten Motor umfasst, die mit einer Gegenlichtfläche des Sammelspiegels (1) verbunden ist.

2. Solarwärmegewinnungssystem nach Anspruch 1, bei dem der Reflexionsspiegel (5) ein ebener Spiegel ist.

3. Solarwärmegewinnungssystem nach Anspruch 1, bei dem der Reflexionsspiegel (5) ein Kugelspiegel mit einer ringkonkaven Oberfläche ist.

4. Solarwärmegewinnungssystem nach Anspruch 1, bei dem eine seitliche Fläche des Empfängers (3) mit einem wärmeisolierenden Material beschichtet ist.

5. Solarwärmegewinnungssystem nach Anspruch 1, bei dem eine Form des Sammelspiegels (1) diejenige eines Rotationsparaboloids ist mit einer Fokussierleistung oder ein konvexer Spiegel mit einer sphärischen Form.

6. Solarwärmegewinnungssystem nach Anspruch 1, bei dem der erste Motor und der zweite Motor ausgewählt werden aus einer Gruppe bestehend aus wenigstens einem ausgewählt aus einem Schrittmotor und einem Servomotor.

7. Solarwärmegewinnungssystem nach Anspruch1, umfassend mehr als eine Spiegelanordnung und deren jeweilige elektrische Steuerungseinheit, wobei die elektrischen Steuerungseinheiten seriell oder parallel jeweils miteinander verbunden sind und synchron laufen und wobei die primäre optische Achslinie des Reflexionsspiegels (5) der Spiegelanordnung sich an dem Empfänger (3) konzentriert, welcher einen relativ festen Standort hat.

## Revendications

1. Système de collecte de chaleur solaire, comprenant un miroir collecteur (1) suivant le soleil en temps réel, un récepteur (3) pour recevoir de la chaleur et stocker de l'énergie, et une unité de commande électrique pour commander le miroir collecteur (1) pour suivre le soleil ;
le système de collecte de chaleur solaire comprenant en outre : un miroir projecteur (2) et un miroir réfléchissant (5) ;
le miroir projecteur (2) étant disposé coaxialement et d'un seul tenant avec le miroir collecteur (1) et un foyer du miroir projecteur (2) coïncidant avec celui du miroir collecteur (1), et le miroir projecteur (2) étant disposé sur un autre côté du foyer du miroir collecteur (1) ;
un trou traversant (11) n'interférant pas avec une tache lumineuse du miroir collecteur (1) et beaucoup plus petit qu'une surface du miroir collecteur (1) étant disposé à un centre d'un fond du miroir collecteur (1) ;
le miroir réfléchissant (5) étant disposé à un côté du miroir collecteur (1) opposé au miroir projecteur (2), étant disposé au-dessous du trou traversant (11),
le miroir réfléchissant (5), le miroir collecteur (1), et le miroir projecteur (2) formant un ensemble miroir ;
le récepteur (3) étant disposé de manière fixe au niveau d'une direction d'extension d'une ligne d'axe optique principal du miroir réfléchissant (5), et un premier moteur étant disposé au niveau de la ligne d'axe optique principal pour entraîner tout l'ensemble miroir pour tourner autour de la ligne d'axe optique principal qui est un axe de rotation de l'ensemble miroir, le premier moteur étant relié à l'unité de commande électrique et fonctionnant sous son contrôle ;
le système de collecte de chaleur solaire comprenant en outre un ensemble de réglage d'angle de miroir collecteur axialement perpendiculaire à l'axe de rotation de l'ensemble miroir, comprenant un poids de lestage (62) dont les couples sont décalés par rapport à un centre de réflexion du miroir réfléchissant (5),
l'axe optique principal étant une lumière se réfléchissant au centre de réflexion du miroir réfléchissant (5) ;
le premier moteur disposé sur la ligne d'axe optique principal étant configuré pour permettre à l'ensemble miroir de tourner autour de l'axe optique principal, suivant le lever du soleil à l'est et le coucher du soleil à l'ouest et se déplaçant de manière synchrone avec le soleil ; et
le second moteur étant configuré pour tirer la tige de traction de second moteur (61) et le poids de lestage (62) pour régler un angle d'inclinaison du miroir collecteur (1) pour garantir que le miroir collecteur (1) est perpendiculaire à la lumière incidente du soleil pour suivre le soleil lorsque le soleil se déplace entre le Tropique du Capricorne et le Tropique du Cancer chaque jour, **caractérisé par le fait que** le miroir collecteur (1) et le miroir projecteur (2) sont reliés d'un seul tenant par l'intermédiaire d'un cardan gyroscopique (4) ; **par le fait que** le miroir réfléchissant (5) est relié au cardan gyroscopique (4) et à une bordure de trou, le miroir réfléchissant (5) étant capable de tourner sur le cardan gyroscopique (4) ; et **par le fait que** l'ensemble de réglage d'angle de miroir collecteur comprend une tige de traction de second moteur (61) reliée à une surface arrière du miroir collecteur (1).

2. Système de collecte de chaleur solaire selon la revendication 1, dans lequel le miroir réfléchissant (5) est un miroir plan.

3. Système de collecte de chaleur solaire selon la revendication 1, dans lequel le miroir réfléchissant (5) est un miroir boule avec une surface concave en anneau.

4. Système de collecte de chaleur solaire selon la revendication 1, dans lequel une surface latérale du récepteur (3) est revêtue d'un matériau thermo-isolant.

5. Système de collecte de chaleur solaire selon la revendication 1, dans lequel une forme du miroir collecteur (1) est un paraboloïde de révolution ayant une performance de focalisation, ou un miroir convexe d'une forme sphérique.

6. Système de collecte de chaleur solaire selon la revendication 1, dans lequel le premier moteur et le second moteur sont choisis parmi un groupe constitué par au moins un parmi un moteur pas-à-pas et un servomoteur.

7. Système de collecte de chaleur solaire selon la revendication 1, comprenant plus d'un ensemble miroir, et leur unité de commande électrique respective ;
les unités de commande électrique étant reliées en série ou en parallèle les unes aux autres et fonctionnant de manière synchrone, et la ligne d'axe optique principal du miroir réfléchissant (5) de l'ensemble miroir se concentrant au récepteur (3) qui a un emplacement relativement fixe.
